# FASCICULE DE BREVET EUROPEEN

(11) **EP 2 577 800 B1**
(45) Date de publication et mention de la délivrance du brevet: **13.11.2019**
(21) Numéro de dépôt: 11726889.6
(22) Date de dépôt: 23.05.2011
(51) Int. Cl.: H01Q 7/00, H01Q 1/22, G06K 7/10, G06K 19/077

(54) **ANTENNE POUR DISPOSITIF NFC**
ANTENNE FÜR EIN NFC-GERÄT
ANTENNA FOR AN NFC DEVICE

(30) Priorité: 27.05.2010 FR 1054118
(43) Date de publication de la demande: 10.04.2013
(73) Titulaire: Orange, 75015 Paris (FR)
(72) Inventeur: LEVIONNAIS, Philippe, 14000 Caen (FR); PICQUENOT, David, 14280 Authie (FR)
(74) Mandataire: Plasseraud IP
(86) Numéro de dépôt international: PCT/FR2011/051162
(87) Numéro de publication internationale: WO 2011/148088

(56) Documents cités:
- EP-A1- 1 843 282
- EP-A2- 1 681 778
- WO-A1-2007/080214
- US-A1- 2005 011 961

## Description

La présente invention concerne le domaine de la technologie du sans contact, et plus particulièrement le domaine de l'utilisation d'une telle technologie dans les terminaux de communication mobiles pour exécuter des applications dites « sans contact ».

Un exemple de mise en œuvre d'applications sans contact repose sur une technologie de type NFC (pour 'Near Field Communication' en anglais). Ces applications sans contact peuvent être, par exemple, relatives à des transactions électroniques dans le domaine bancaire ou encore dans les transports publics, ou bien également des applications d'identification, de contrôle d'accès. Une communication de type NFC est établie entre deux entités sans contact, ou encore deux entités NFC, l'une opérant en tant que carte sans contact et l'autre opérant en tant que lecteur de carte sans contact. Dans un autre mode de fonctionnement, dit mode P2P (pour 'Peer To Peer'), deux entités NFC opérant en tant que carte sans contact échangent des données localement et jouent donc un rôle équivalent.

Une telle entité NFC est composée d'un dispositif de communication en champ proche, ou encore dispositif NFC par la suite, et d'une antenne associée qui lui permet de mettre en place une communication sans contact avec une autre entité NFC. L'entité NFC qui opère en tant que carte sans contact peut par exemple correspondre à une étiquette radio 'RFID' (de l'anglais 'Radio Frequency Identification'). Une entité NFC qui opère en tant que lecteur de carte peut correspondre par exemple à un terminal de paiement électronique ou une borne pour valider des tickets électroniques de transport, ou encore un lecteur d'étiquettes adapté pour identifier des étiquettes radio, selon les applications considérées.

Les fonctionnalités d'une telle entité sans contact peuvent être fournies par un terminal de téléphonie mobile. Dans ce cas, le terminal de téléphonie mobile contient une carte d'identité d'abonné, ou encore carte SIM (de l'anglais 'Subscriber Identity Module'), ainsi qu'un dispositif NFC et son antenne associée.

Dans ce contexte, des applications, dites « sans contact » qui nécessitent un certain niveau de sécurité, sont habituellement installées dans la carte d'identité d'abonné du terminal mobile, ou carte « SIM ». Une communication peut ainsi être établie au sein du terminal entre l'application sans contact de la carte d'identité d'abonné et le dispositif sans contact. Puis, le dispositif sans contact, installé sur le terminal mobile, permet un dialogue du terminal mobile, plus précisément de l'application concernée, avec une autre entité sans contact située à proximité du terminal. Ces téléphones mobiles peuvent alors être utilisés en tant qu'entité sans contact par exemple.

Les antennes qui sont utilisées dans ce contexte peuvent être de formes très diverses, répondant notamment à la fois à des critères de performance ainsi qu'à des critères de place occupée par l'antenne.

On connait ainsi des antennes pour dispositif NFC qui sont de forme carré ou rectangulaire, ou encore circulaire et qui comprennent une pluralité de spires enroulées les unes autour des autres.

Dans la recherche d'une forme performante d'antenne NFC, il est classique de veiller à conserver un espace vacant, de taille importante relativement à la taille de l'antenne, au centre des spires afin de laisser passer le flux magnétique généré par les spires.

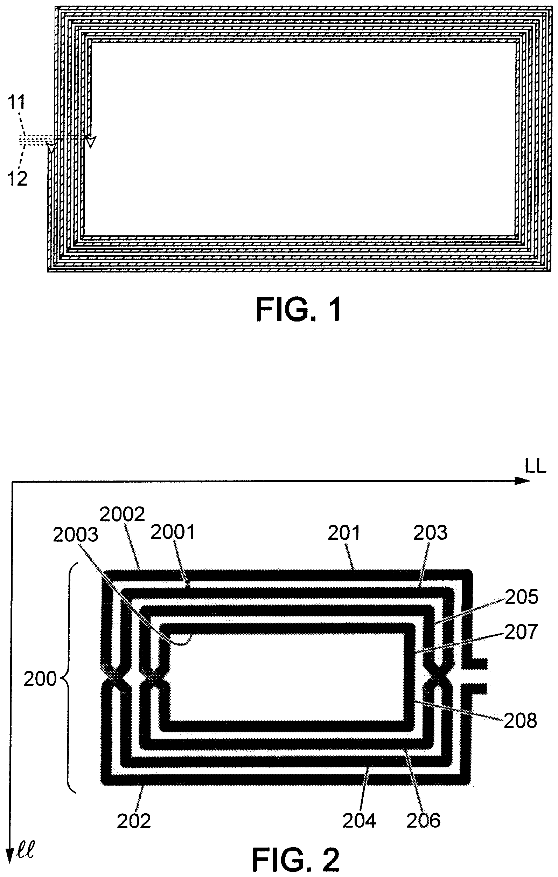

La figure 1 illustre une antenne selon l'art antérieur. Cette antenne est une antenne SONNET illustrée sur le site référencé ci-dessous: http://www.sonnetsoftware.com/support/files/appnote/SAN-206A%20RFID%20Antenna%20Design%200602.pdf

Elle est formée de deux fils d'antenne 11 et 12 faisant chacun trois tours et présente donc six spires. Chaque spire a une épaisseur de 0.5 mm. Deux spires voisines sont espacées entre elles une à une de 0.5 mm consécutivement.

Cette forme d'antenne respecte la contrainte évoquée ci-dessus, consistant à maintenir un espace libre conséquent relativement à l'antenne dans sa globalité pour le flux électromagnétique généré. En effet, ayant des spires d'épaisseur relativement faible, cette antenne permet de conserver un espace pour le passage du champ magnétique au sein des spires. Le document US 2005/0011961 A1 divulgue une antenne pour communication en champ proche selon le préambule de la revendication 1.

La présente invention vise à améliorer les performances de ce type d'antenne.

Un premier aspect de la présente invention propose une antenne pour communication en champ proche selon la revendication 1.

Il est prévu que les spires épousent des formes de tailles respectives différentes. On entend par les termes 'distance inter spires' entre deux spires voisines, la distance entre deux spires consécutives ou plus précisément, la distance entre le contour intérieur de la spire la plus grande et le contour extérieur de la spire la plus petite parmi les deux spires voisines considérées, selon un axe perpendiculaire aux parties des contours considérées.

On entend par périphérie intérieure, respectivement extérieure, de l'antenne, le contour intérieur, respectivement extérieur, de la spire la plus petite, respectivement la plus grande, de l'antenne. Autrement dit, la périphérie intérieure de l'antenne peut être considérée comme la frontière entre l'antenne et un espace vacant au centre de l'antenne, ou encore au centre des spires, et la périphérie extérieure de l'antenne peut être considérée comme la frontière entre l'antenne et l'extérieur de l'antenne.

On entend par les termes 'forme sensiblement rectangulaire' une forme qui présente des côtés opposés rectilignes, ou tout au moins qui apparaissent comme rectilignes à l'œil nu, et parallèles, ou tout au moins qui apparaissent comme parallèles entre eux à l'œil nu.

Une forme sensiblement rectangulaire présente l'avantage d'occuper une place réduite par rapport à une antenne similaire de forme circulaire.

Toutefois, une 'forme sensiblement rectiligne' n'induit pas de manière systématique que les côtés consécutifs se coupent en angles droits. En effet, une forme sensiblement rectangulaire n'exclut pas le fait que deux côtés consécutifs présentent entre eux des arrondis.

Dans un mode de réalisation de la présente invention, on peut prévoir que le contour extérieur des spires au niveau des jonctions de deux côtés consécutifs forme un arrondi, alors que le contour intérieur des spires forme des angles droits au niveau des jonctions de deux côtés consécutifs, ou tout au moins que ce contour intérieur apparaisse comme formant des angles droits à l'œil nu, au niveau de ces jonctions.

Une telle forme d'angle des spires permet une bonne circulation du courant, grâce aux arrondis en contour extérieur.

On entend par le fait que la largeur d'une spire est 'sensiblement égale à la distance inter spires' le fait que la largeur d'une spire est relativement très proche de la distance inter spires. Tel est le cas, notamment, lorsque la largeur de spire est égale à plus ou moins 20% la distance inter spires.

Dans un mode de réalisation de la présente invention, l'antenne pour communication en champ proche a une périphérie intérieure présentant, d'une part, une longueur supérieure à 5 fois la distance entre la périphérie extérieure et la périphérie intérieure selon un axe longitudinal de ladite antenne, et, d'autre part, une largeur supérieure à 2 fois la distance entre la périphérie extérieure et la périphérie intérieure selon un axe latéral de ladite antenne.

Grâce à ces conditions, on est en mesure de respecter un espace vacant au centre de l'antenne assez grand pour permettre le passage d'un flux magnétique généré par les spires d'antenne de telle sorte que cette antenne présente des performances élevées.

Dans un mode de réalisation de la présente invention, la distance inter spires est sensiblement égale à 1 mm.

On entend par le terme 'sensiblement' le fait que la distance inter spires est relativement très proche de 1 mm. Tel est le cas par exemple lorsque la distance inter spires est égale à 1 mm plus ou moins 20%.

Il convient de noter ici qu'une telle largeur de spire est relativement large pour ce type d'antenne. En effet, il est classique de limiter cette largeur de sorte à conserver assez d'espace au centre de l'antenne tout en disposant d'une pluralité de spires.

Une telle largeur de spire permet une meilleure circulation de courant et fournit un niveau d'induction élevé.

Dans un mode de réalisation, la périphérie extérieure de l'antenne a une longueur sensiblement égale à 55 mm et une largeur sensiblement égale à 36 mm.

Le terme 'sensiblement' signifie ici à plus ou moins 20% maximal. Cette taille peut être avantageusement adaptée à un usage dans un téléphone mobile.

Une telle antenne peut permettre une portée de l'ordre de 8 à 10 cm.

Les quatre spires correspondent dans l'ordre de taille décroissant à des première, deuxième, troisième et quatrième spires. Chacune des spires a une première partie et une seconde partie. La première partie de la première spire est couplée à la seconde partie de la deuxième spire, la seconde partie de la première spire est couplée à la première partie de la deuxième spire,
la première partie de la troisième spire est couplée à la seconde partie de la quatrième spire, et la seconde partie de la troisième spire est couplée à la première partie de la quatrième spire.

Une telle forme d'antenne présente des performances surprenantes, notamment par le fait que contrairement aux principes respectés dans l'art antérieur, l'espace vacant au centre des spires est relativement restreint.

Un deuxième aspect de la présente invention propose une entité électronique adaptée pour un terminal mobile, le terminal mobile étant apte à comprendre une carte d'identité d'abonné, l'entité électronique comprenant un dispositif de communication en champ proche, une antenne selon le premier aspect de la présente invention pour le dispositif de communication en champ proche et une interface filaire destinée à relier le dispositif de communication en champ proche à la carte d'identité d'abonné,
le dispositif de communication en champ proche étant positionné au niveau de l'antenne.

On entend par les termes 'dispositif NFC' ou 'dispositif sans contact', un ensemble comprenant un composant NFC, ou encore composant sans contact, et d'autres composants électroniques qui sont utiles à son implémentation dans un circuit pour son utilisation, comme par exemple des condensateurs ou encore des résistances.

Un troisième aspect de la présente invention propose un terminal mobile adapté à la fois pour opérer dans un réseau de communication et pour gérer des communications en champ proche, apte à recevoir une entité électronique selon le deuxième aspect de la présente invention.

Un quatrième aspect de la présente invention propose un système de communication mobile comprenant une pluralité de terminaux mobiles selon le troisième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1, déjà décrite, illustre une forme d'antenne selon l'art antérieur ;
- la figure 2 illustre une antenne selon un mode de réalisation de la présente invention ;
- la figure 3 illustre une antenne selon un autre mode de réalisation ;
- la figure 4 illustre une entité électronique selon un mode de réalisation de la présente invention ; et
- la figure 5 illustre un système de téléphonie mobile selon un mode de réalisation de la présente invention comprenant un terminal selon un mode de réalisation de la présente invention.

La figure 2 illustre une forme d'antenne selon un mode de réalisation de la présente invention. L'illustration ne respecte ni les grandeurs réelles, ni les proportions réelles.

Cette antenne 200 pour communication en champ proche a une distance inter spires sensiblement égale à 1 mm.

Selon les caractéristiques de l'antenne d'un mode de réalisation, au centre de ses spires est localisé un espace vacant :
- de longueur inférieure à 7 fois la distance entre la périphérie extérieure 2002 et la périphérie intérieure 2003 selon l'axe longitudinale LL de l'antenne, c'est-à-dire 7 mm, soit une longueur inférieure à 49 mm ;
- de largeur inférieure à 4 fois la distance entre la périphérie extérieure 2002 et la périphérie intérieure 2003 selon l'axe latéral ll de l'antenne, c'est-à-dire 7 mm, soit une largeur inférieure à 28 mm.

La périphérie extérieure 2002 de l'antenne peut dans ce cas présenter une longueur sensiblement égale à 63 mm et une largeur sensiblement égale à 42 mm.

Dans un mode de réalisation, la périphérie extérieure 2002 de l'antenne 200 peut aussi avoir une longueur sensiblement égale à 55 mm et une largeur sensiblement égale à 36 mm, le centre vacant défini par la périphérie intérieure 2003 de l'antenne ayant alors une longueur sensiblement égale à 41 mm et une largeur sensiblement égale à 22 mm.

Toutefois, il parait raisonnable de prévoir que le centre vacant de l'antenne présente une longueur supérieure à 5 fois la distance entre la périphérie extérieure 2002 et la périphérie intérieure 2003 selon l'axe longitudinal LL de l'antenne et une largeur supérieure à 2 fois la distance entre la périphérie extérieure 2002 et la périphérie intérieure 2003 selon l'axe latéral ll de l'antenne.

Elle comprend quatre spires correspondant, dans l'ordre de taille décroissant, à des première, deuxième, troisième et quatrième spires.

La première spire a une première partie 201 et une seconde partie 202 ;
la deuxième spire a une première partie 203 et une seconde partie 204 ;
la troisième spire a une première partie 205 et une seconde partie 206 ;
la quatrième spire a une première partie 207 et une seconde partie 208.

Selon un mode de réalisation, la première partie 201 de la première spire est couplée à la seconde partie 204 de la deuxième spire, la seconde partie 202 de la première spire est couplée à la première partie 203 de la deuxième spire,
la première partie 205 de la troisième spire est couplée à la seconde partie 208 de la quatrième spire, et la seconde partie 206 de la troisième spire est couplée à la première partie 207 de la quatrième spire.

Avantageusement, cette antenne présente des performances permettant une portée de 8 à 10 centimètres.

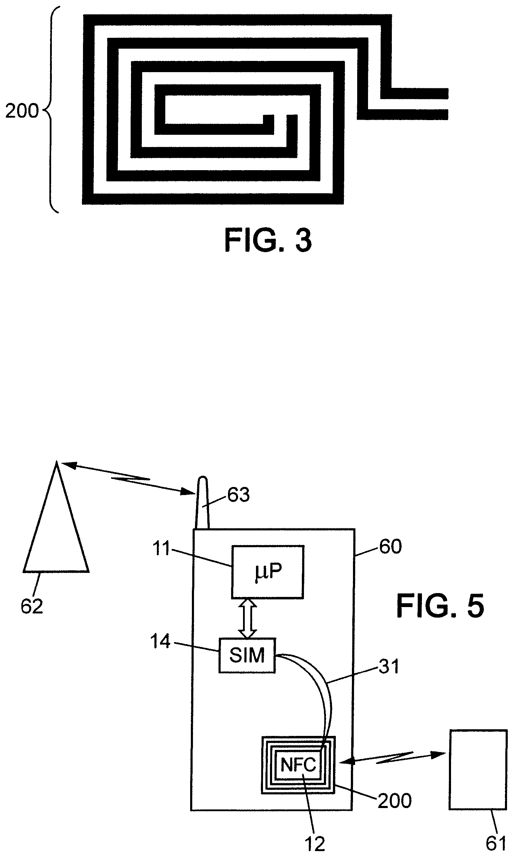

La figure 3 illustre une antenne selon un autre mode de réalisation.

L'antenne ici illustrée présente des caractéristiques similaires à celle illustrée en figure 2, à la différence que les deux fils d'antenne la constituant s'enroulent de manière parallèle de sorte à former les 4 spires. Il n'y a pas de croisement entre spires comme c'est le cas dans l'antenne illustrée en figure 2.

Ici encore, il convient de noter que la figure n'est pas à l'échelle des caractéristiques réelles de l'antenne.

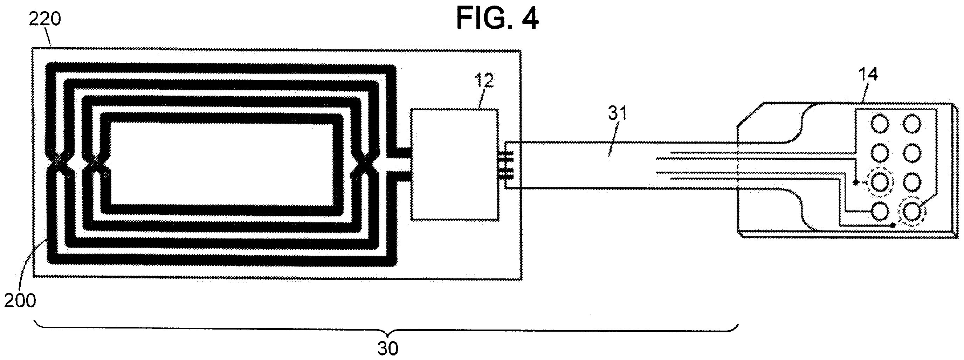

La figure 4 illustre une entité électronique selon un mode de réalisation de la présente invention.

Une telle entité électronique 30 est destinée à être utilisée dans un terminal mobile comme par exemple un terminal de téléphonie mobile, pour que le terminal mobile offre des fonctionnalités de type téléphonie mobile et des fonctionnalités de type carte sans contact. A cet effet, le terminal comprend donc une carte d'identité d'abonné 14, par exemple une carte « SIM » (pour « Subscriber Identity Module »), pour les applications de téléphonie mobile, et l'entité électronique selon un mode de réalisation de la présente invention comprend un dispositif de communication en champ proche 12, c'est-à-dire un dispositif NFC comprenant un dispositif électronique NFC et des circuits électroniques (non représentés sur la figure 4), une antenne 200 pour ce dispositif NFC, ainsi qu'une interface filaire 31 destinée à relier le dispositif NFC avec la carte SIM dont il est distant.

Dans un mode de réalisation de la présente invention, le dispositif NFC est positionné au niveau de l'antenne 200 et relié à la carte d'identité d'abonné 14 via l'interface filaire 31. L'interface filaire 31 comprend :
- un premier fil de liaison, qui peut être en cuivre, destiné à transporter des informations selon un protocole de gestion de communication en champ proche ; et
- des deuxième et troisième fils de liaison qui peuvent être en cuivre, destinés à transporter l'alimentation électrique entre carte SIM et dispositif NFC.

Avantageusement, grâce à cette entité électronique comprenant une antenne 200 selon un mode de réalisation de la présente invention, on est en mesure d'adapter un terminal mobile de type téléphone mobile à des applications de type NFC. En effet, une telle entité électronique 30 peut aisément être reliée à une carte SIM quelconque insérée dans un terminal mobile bénéficiant ainsi notamment de l'alimentation électrique fournie à la carte SIM.

Cette antenne peut présenter des dimensions qui sont particulièrement adaptées pour être embarquée d'une manière quelconque et intégrée au téléphone mobile.

De manière plus précise, un terminal mobile présente généralement des contacts mécaniques qui sont adaptés pour exercer une pression au niveau des contacts de la carte SIM. Deux de ces contacts représentent l'alimentation électrique respectivement avec une borne de masse GND (pour 'Ground') et une borne d'alimentation VCC. On prévoit de positionner, entre les contacts du terminal mobile GND et VCC et les contacts de la carte SIM correspondants, des contacts de l'interface filaire selon un mode de réalisation de la présente invention.

Afin de réduire le fil d'antenne et donc d'augmenter les performances de réception radio au niveau NFC, on peut prévoir de positionner le dispositif NFC au niveau de l'antenne.

On entend ici par les termes 'positionné au niveau de l'antenne', le fait que le dispositif NFC et l'antenne ne sont pas distants, mais au contraire positionnés à proximité l'un de l'autre de telle sorte qu'il n'y ait pas de dégradations de signaux analogiques entre l'antenne et le dispositif NFC. Dans un mode de réalisation, le dispositif NFC peut être intégré directement à l'antenne.

On peut également prévoir que des fils de longueur relativement courte relient le dispositif NFC et son antenne. Dans ce cas, la longueur de ces fils d'antenne est telle que la transmission des signaux sur ces fils n'est pas perturbée par l'environnement dans le boitier du terminal mobile, comme des masses métalliques ou des dispositifs électroniques notamment.

Dans un mode de réalisation de la présente invention, l'antenne est une antenne adaptée pour être positionnée dans un boitier de terminal mobile et pour être amovible aisément. Dans ce cas, lorsqu'on retire l'antenne, on retire également le dispositif NFC qui lui est directement connecté.

Dans une telle entité électronique, il est donc prévu d'implanter le dispositif NFC, ou dispositif de communication en champ proche, au niveau de l'antenne qui lui est associée pour mettre en œuvre les communications qu'il gère. En co-localisant ainsi le dispositif de communication en champ proche et son antenne, il est possible de garantir un certain niveau de qualité des fonctionnalités radio de type NFC quelque soit le type de téléphone mobile dans lequel cette entité électronique est positionnée et quelque soit aussi le chemin emprunté par l'interface filaire entre la carte SIM et le dispositif NFC au sein du boitier du téléphone.

On peut notamment prévoir qu'un support 220 du dispositif NFC 12 et de l'antenne 200 présente une forme rectangulaire d'une longueur de 76 mm environ sur une largeur de 40 mm environ (environ c'est-à-dire à plus ou moins 20%).

On obtient une entité électronique permettant à un utilisateur d'un terminal mobile de bénéficier à la fois des fonctionnalités de téléphonie mobile et des fonctionnalités de carte sans contact, et lui permettant de conserver toutes ces fonctionnalités, même dans le cas d'un changement de téléphone mobile. En effet, l'utilisateur qui change de téléphone mobile peut, de manière classique, insérer la carte SIM de son ancien téléphone dans son nouveau téléphone ; la carte SIM peut être ici complètement indépendante de l'entité électronique et donc complètement standard . Il peut en outre positionner aisément l'entité électronique dans son nouveau téléphone et la connecter à la carte SIM, accédant ainsi facilement à toutes les applications sans contact et les données nécessaires qui y sont stockées. Cette architecture d'entité électronique présente l'avantage de pouvoir se connecter directement à toute carte SIM d'un téléphone mobile et de pouvoir être opérationnelle via la carte SIM considérée.

Il y a, dans un mode de réalisation de la présente invention, une interface filaire entre la carte SIM et le dispositif de communication en champ proche puisque le dispositif NFC est distant de la carte SIM, c'est-à-dire qu'il n'est pas intégré à la carte SIM.

Ainsi, avantageusement, les contacts de la carte SIM, qui sont en général les contacts C4 et C8, précédemment utilisés pour connecter, via une nappe filaire, l'antenne au dispositif NFC dans la carte SIM, peuvent être libérés, puisque le dispositif NFC n'est pas implémenté dans la carte SIM.

Il est ici possible de prévoir une interface filaire d'une longueur adaptée à chaque boitier de terminal mobile sans toutefois perturber les performances des applications NFC.

Un mode de réalisation de la présente invention trouve avantageusement à s'appliquer pour des dispositifs NFC qui consistent à émuler une carte sans contact ou encore pour des dispositifs qui consistent à opérer en tant que lecteur de carte.

Dans le cas d'un fonctionnement en mode émulation de carte, l'alimentation électrique du dispositif NFC peut être fournie via l'antenne 200 du dispositif NFC par un équipement NFC avec lequel la carte sans contact discute, c'est-à-dire par l'équipement qui opère en tant que lecteur de carte sans contact. Ici, l'interface filaire peut ne supporter qu'un seul fil de liaison entre le dispositif NFC et la carte SIM, ce fil étant celui qui est adapté pour transporter des informations selon un protocole de gestion de communications en champ proche.

Dans d'autres applications, le dispositif NFC a besoin d'être alimenté directement.

A cet effet, une telle interface filaire peut également comprendre une liaison pour transporter une alimentation électrique. Ainsi, l'interface filaire peut transporter en outre une alimentation électrique depuis le terminal mobile vers le dispositif NFC.

Alternativement, on peut prévoir que le dispositif NFC soit connecté directement sur la batterie du terminal mobile. Dans ce cas, nul n'est besoin de l'interface filaire pour l'alimentation électrique du dispositif NFC. En outre, il suffit alors de changer la batterie pour transformer un terminal mobile classique en terminal mobile NFC selon un mode de réalisation de la présente invention.

La figure 5 illustre un système de téléphonie mobile selon un mode de réalisation de la présente invention et un terminal selon un mode de réalisation de la présente invention.

Un tel système comprend une pluralité de terminaux 60, chacun étant adapté, selon un mode de réalisation de la présente invention, d'une part pour gérer des communications de téléphonie mobile, et d'autre part pour gérer des communications de type NFC. Un tel terminal 60 est apte à recevoir une entité électronique selon l'un des modes de réalisation de la présente invention.

Le système comprend des équipements de réseaux de téléphonie mobile, tels que des stations de base 62, avec lesquelles les terminaux 60 peuvent communiquer via une antenne 63 des téléphones mobiles. Chaque terminal mobile 60 comprend un micro processeur 11. Le système comprend également un équipement NFC 61 d'applications NFC avec lequel les téléphones mobiles 60 peuvent communiquer via l'antenne 200. Ces deux antennes 63 et 200 sont adaptées pour la mise en œuvre respectivement d'applications de téléphonie mobile et d'applications NFC.

## Revendications

1. Antenne (200) pour communication en champ proche,
ladite antenne comprenant au moins quatre spires et présentant une périphérie extérieure (2002) et une périphérie intérieure (2003) de forme sensiblement rectangulaire ;
une distance inter spires (2001) séparant deux spires voisines ;
dans laquelle chaque spire a une largeur sensiblement égale à la distance inter spires ; et
dans laquelle la périphérie intérieure a, d'une part, une longueur inférieure à 7 fois la distance entre la périphérie extérieure et la périphérie intérieure selon un axe longitudinal (LL) de ladite antenne, et, d'autre part, une largeur inférieure à 4 fois la distance entre la périphérie extérieure et la périphérie intérieure selon un axe latéral (ll) de ladite antenne, **caractérisée en ce que** quatre spires desdites au moins quatre spires correspondent dans l'ordre de taille décroissant à des première, deuxième, troisième et quatrième spires, chacune desdites spires ayant une première partie (201, 203, 205, 207) et une seconde partie (202, 204, 206, 208) ;
la première partie (201) de la première spire est couplée à la seconde partie (204) de la deuxième spire, la seconde partie (202) de la première spire est couplée à la première partie (203) de la deuxième spire,
la première partie (205) de la troisième spire est couplée à la seconde partie (208) de la quatrième spire, et la seconde partie (206) de la troisième spire est couplée à la première partie (207) de la quatrième spire.

2. Antenne (200) pour communication en champ proche selon la revendication 1, dans laquelle la périphérie intérieure a, d'une part, une longueur supérieure à 5 fois la distance entre la périphérie extérieure et la périphérie intérieure selon l'axe longitudinal (LL) de ladite antenne, et, d'autre part, une largeur supérieure à 2 fois la distance entre la périphérie extérieure et la périphérie intérieure selon l'axe latéral (ll) de ladite antenne.

3. Antenne (200) pour communication en champ proche selon la revendication 1, dans laquelle la distance inter spires est sensiblement égale à 1 mm.

4. Antenne (200) pour communication en champ proche selon la revendication 1, dans laquelle la périphérie extérieure de ladite antenne a une longueur sensiblement égale à 55 mm et une largeur sensiblement égale à 36 mm.

5. Entité électronique (30) adaptée pour un terminal (60) mobile, ledit terminal mobile étant apte à comprendre une carte d'identité d'abonné (14),
ladite entité électronique comprenant un dispositif de communication en champ proche (12), une antenne (200) selon l'une quelconque des revendications 1 à 4 pour le dispositif de communication en champ proche et une interface filaire (31) destinée à relier le dispositif de communication en champ proche à la carte d'identité d'abonné,
le dispositif de communication en champ proche étant positionné au niveau de l'antenne.

6. Terminal (60) mobile adapté à la fois pour opérer dans un réseau de communication et pour gérer des communications en champ proche, apte à recevoir une entité électronique selon la revendication 5.

7. Système de communication mobile comprenant une pluralité de terminaux (60) mobiles selon la revendication 6.

## Patentansprüche

1. Antenne (200) für die Nahfeldkommunikation, wobei die Antenne mindestens vier Windungen umfasst und einen Außenumfang (2002) und einen Innenumfang (2003) von im Wesentlichen rechteckiger Form aufweist; einen Zwischenwindungsabstand (2001), der zwei benachbarte Windungen trennt; wobei jede Windung eine Breite aufweist, die im Wesentlichen gleich dem Zwischenwindungsabstand ist; und wobei der Innenumfang einerseits eine Länge von weniger als dem Siebenfachen des Abstands zwischen dem Außenumfang und dem Innenumfang entlang einer Längsachse (LL) der Antenne und andererseits eine Breite von weniger als dem Vierfachen des Abstands zwischen dem Außenumfang und dem Innenumfang entlang einer Querachse (11) der Antenne aufweist, **dadurch gekennzeichnet, dass** vier Windungen der mindestens vier Windungen in abnehmender Reihenfolge der Größe einer ersten, zweiten, dritten und vierten Windung entsprechen, wobei jede der Windungen einen ersten Abschnitt (201, 203, 205, 207) und einen zweiten Abschnitt (202, 204, 206, 208) aufweist; der erste Abschnitt (201) der ersten Windung mit dem zweiten Abschnitt (204) der zweiten Windung gekoppelt ist, der zweite Abschnitt (202) der ersten Windung mit dem ersten Abschnitt (203) der zweiten Windung gekoppelt ist, der erste Abschnitt (205) der dritten Windung mit dem zweiten Teil (208) der vierten Windung gekoppelt ist und der zweite Abschnitt (206) der dritten Windung mit dem ersten Abschnitt (207) der vierten Windung gekoppelt ist.

2. Antenne (200) für die Nahfeldkommunikation nach Anspruch 1, wobei der Innenumfang einerseits eine Länge aufweist, die größer ist als das Fünffache des Abstands zwischen dem Außenumfang und dem Innenumfang entlang der Längsachse (LL) der Antenne, und andererseits eine Breite, die größer ist als das Zweifache des Abstands zwischen dem Außenumfang und dem Innenumfang entlang der Querachse (11) der Antenne.

3. Antenne (200) für die Nahfeldkommunikation nach Anspruch 1, wobei der Zwischenwindungsabstand im Wesentlichen gleich 1 mm ist.

4. Antenne (200) für die Nahfeldkommunikation nach Anspruch 1, wobei der Außenumfang der Antenne eine Länge im Wesentlichen gleich 55 mm und eine Breite im Wesentlichen gleich 36 mm aufweist.

5. Elektronische Einheit (30), die für ein mobiles Endgerät (60) angepasst ist, wobei das mobile Endgerät geeignet ist, eine Abonnentenkennkarte (14) zu umfassen, wobei die elektronische Einheit eine Nahfeldkommunikationsvorrichtung (12), eine Antenne (200) nach einem der Ansprüche 1 bis 4 für die Nahfeldkommunikationsvorrichtung und eine verkabelte Schnittstelle (31) zum Verbinden der Nahfeldkommunikationsvorrichtung mit der Abonnentenkennkarte umfasst, wobei die Nahfeldkommunikationsvorrichtung auf Höhe der Antenne positioniert ist.

6. Mobiles Endgerät (60), das sowohl für den Betrieb in einem Kommunikationsnetzwerk als auch für das Management der Nahfeldkommunikation angepasst und geeignet ist, eine elektronische Einheit nach Anspruch 5 aufzunehmen.

7. Mobiles Kommunikationssystem mit einer Vielzahl von mobilen Endgeräten (60) nach Anspruch 6.

## Claims

1. Antenna (200) for near-field communication,
said antenna comprising at least four turns and exhibiting an exterior periphery (2002) and an interior periphery (2003) of substantially rectangular shape;
an inter-turn distance (2001) separating two neighboring turns;
in which each turn has a width substantially equal to the inter-turn distance; and
in which the interior periphery has, on the one hand, a length of less than 7 times the distance between the exterior periphery and the interior periphery along a longitudinal axis (LL) of said antenna, and, on the other hand, a width of less than 4 times the distance between the exterior periphery and the interior periphery along a lateral axis (ll) of said antenna, **characterized in that** four turns of said at least four turns correspond in order of decreasing size to first, second, third and fourth turns, each of said turns having a first part (201, 203, 205, 207) and a second part (202, 204, 206, 208);
the first part (201) of the first turn is coupled to the second part (204) of the second turn, the second part (202) of the first turn is coupled to the first part (203) of the second turn,
the first part (205) of the third turn is coupled to the second part (208) of the fourth turn, and the second part (206) of the third turn is coupled to the first part (207) of the fourth turn.

2. Antenna (200) for near-field communication according to Claim 1, in which the interior periphery has, on the one hand, a length of greater than 5 times the distance between the exterior periphery and the interior periphery along the longitudinal axis (LL) of said antenna, and, on the other hand, a width of greater than 2 times the distance between the exterior periphery and the interior periphery along the lateral axis (ll) of said antenna.

3. Antenna (200) for near-field communication according to Claim 1, in which the inter-turn distance is substantially equal to 1 mm.

4. Antenna (200) for near-field communication according to Claim 1, in which the exterior periphery of said antenna has a length substantially equal to 55 mm and a width substantially equal to 36 mm.

5. Electronic entity (30) adapted for a mobile terminal (60), said mobile terminal being able to comprise a subscriber identity card (14),
said electronic entity comprising a near-field communication device (12), an antenna (200) according to any one of Claims 1 to 4 for the near-field communication device and a wire-based interface (31) intended to link the near-field communication device to the subscriber identity card,
the near-field communication device being positioned at the level of the antenna.

6. Mobile terminal (60) adapted at one and the same time to operate in a communication network and to manage near-field communications, able to receive an electronic entity according to Claim 5.

7. Mobile communication system comprising a plurality of mobile terminals (60) according to Claim 6.
